# EUROPEAN PATENT APPLICATION

(11) **EP 2 131 549 A1**
(43) Date of publication of application: **09.12.2009**
(21) Application number: 08157552.4
(22) Date of filing: 04.06.2008
(51) Int. Cl.: H04L 29/06

(54) **Nodes of a content sharing group, methods performed by the nodes, and computer programs executed in the nodes**

(71) Applicant: TELEFONAKTIEBOLAGET LM ERICSSON (publ), 164 83 Stockholm (SE)
(72) Inventor: Björkengren, Ulf, SE-237 34, BJÄRRED (SE); Hartung, Frank, DE-52134, HERZOGENRATH (DE)
(74) Representative: Andersson, Björn E.

(57) **Abstract**

A content sharing group node of a content sharing group is disclosed. The content sharing node is arranged to receive a sharing right comprising boundaries of re-distribution of the sharing right and content sharing group membership restrictions to further content sharing group nodes of the content sharing group, arranged to access the content according to the combined restrictions of the sharing right and a usage right, and arranged to re-distribute the sharing right within the boundaries of re-distribution of the sharing right and to restrict its content sharing group membership according to the sharing right, wherein the content sharing group is defined as the sharing right is redistributed. Methods and computer programs for content sharing are also disclosed

## Description

### Technical field

The present invention relates to nodes of a content sharing group, methods to be performed by the nodes, and computer programs to be executed in the nodes.

### Background

Content distribution and protection of the distributed content are issues where several attempts have been made to provide a solution where the content issuer, content distributor, and the user of the content all experience a fair and usable approach. For the protection of the content against unauthorized distribution, different techniques of Digital Rights Management (DRM) have been applied, where the content is encrypted, and keys for decrypting the content is distributed, together with the content or separate, giving rights to use the content, e.g. playing or rendering. Approaches present so far have shown to be very inclined to protect the content against "pirates", which have implied the approaches to be hard to use by the honorable users. An example on existing solutions is presented in US 2007/0260548 A1, which discloses an account-based DRM system for distributing content. The system includes devices that are associated with one particular account. Several keys are generated for the respective devices, where each particular key of each particular device allows the device to access the content in question. A problem with this is that flexibility is lacking, since all devices have to be pre-defined when getting the content and the right from the content issuer. An approach for overcoming this is presented in WO 2006/129225 A2, where an Authorized Domain (AD) is defined, including a domain policy e.g. maximizing the number of devices that are allowed in the domain. For registration in the domain, an authentication token, e.g. a smart card, have to be present in or in vicinity of the device. Still, flexibility for the honorable user is lacking. Therefore, there is a need for a more flexible approach for content distribution for providing a solution that the honorable user experience as usable without compromising with the content issuer's rights.

### Summary

Here, it should be noted that the illegal distribution is not considered within the scope of this invention, and it is assumed that any party in the distribution follow rules and law of legally correct distribution. No system is considered to be completely proof for illegal activities of "pirates", which may break the system by hacking, or use "the analog hole", i.e. ripping any analog output of the content. Instead, the invention is inclined towards providing a flexible approach, which do not tempt the honorable user to go for illegally distributed material because of its flexibility.

The present invention is based on the understanding that a user of content may use the content in more than one device, cf. the use of content of a physical media bearer as a disc.

According to a first aspect, there is provided a content sharing group node of a content sharing group, the content sharing node is arranged to receive a sharing right comprising boundaries of re-distribution of the sharing right and content sharing group membership restrictions to further content sharing group nodes of the content sharing group, arranged to access the content according to the combined restrictions of the sharing right and a usage right, and arranged to re-distribute the sharing right within the boundaries of re-distribution of the sharing right and to restrict its content sharing group membership according to the sharing right, wherein the content sharing group is defined as the sharing right is re-distributed.

The received sharing right may comprise a parameter or a set of parameters defining the boundaries of re-distribution. The parameter or set of parameters may comprise a maximal number of devices for re-distribution n, where n is an integer larger or equal to 1. The parameter or set of parameters may comprise a maximal number of devices for re-distribution n-1, where n-1 is an integer larger or equal to 1. The received sharing right may further comprise boundaries for membership of the content sharing group. The parameter or set of parameters may comprise any of a maximal number of renderings; a specified content for rendering; a specified bearer or network for sharing; an asynchronous disabler of content sharing group; and a maximal duration in time of the sharing right T. The parameter or set of parameters may comprise a maximal duration in time of the sharing right t, where t is smaller than or equal to T. When the re-distributed right with duration t has lapsed, re-distribution of a sharing right with the parameter or set of parameters may comprise a maximal duration in time of the sharing right T-t is re-distributable.

The content sharing group node may comprise a content sharing management agent arranged to manage the sharing rights.

The content sharing group node may be arranged to provide information to a content sharing group source node on re-distributed sharing rights. The information on re-distributed sharing rights may be provided via the content sharing group node from which the sharing right was received.

The content sharing group node may further comprise a content renderer arranged to render content associated with the sharing right.

According to a second aspect, there is provided a content sharing group source node arranged to distribute a sharing right to a content sharing group node according to any of the preceding claims of a content sharing group, the sharing right comprising boundaries of re-distribution of the sharing right to further content sharing group nodes according to any of the preceding claims of the content sharing group, wherein the content sharing group is defined as the sharing right is re-distributed.

The boundaries may be defined by a parameter or set of parameters comprising any of a maximal number of renderings; a specified content for rendering; a specified bearer or network for sharing; an asynchronously issued disabler of content sharing group; and a maximum duration in time of the sharing right. The boundaries may be a parameter or set of parameters comprising a maximum number N of content sharing group nodes of the sharing right. The received sharing right may further comprise boundaries for membership of the content sharing group.

The content sharing group source node may be a portable device with wireless communication abilities, wherein the content is created by means of the portable device. The portable device may be a mobile telephone.

The content sharing group source node may be a content server.

The content sharing group source node may be arranged to receive information from a content sharing group node on re-distributed sharing rights. The content sharing group source node may further be arranged to disable distribution of sharing rights to a content sharing group node of the content sharing group based on the received information on re-distributed sharing rights.

According to a third aspect, there is provided a method for sharing rights distribution from a content sharing group source node, the method comprising defining boundaries of re-distribution of a sharing right to further content sharing group nodes of a content sharing group, and content sharing group restrictions; and distributing the sharing right to a content sharing group node of the content sharing group, the sharing right comprising the boundaries of re-distribution of the sharing right to further content sharing group nodes of the content sharing group such that their content sharing group memberships are restricted according to the sharing right, wherein the content sharing group is defined as the sharing right is re-distributed.

The method may further comprise receiving information from a content sharing group node on re-distributed sharing rights. The method may further comprise disabling distribution of sharing rights to a content sharing group node of the content sharing group based on the received information on re-distributed sharing rights.

According to a fourth aspect, there is provided a method for sharing rights distribution from a content sharing group node of a content sharing group, the method comprises receiving a sharing right comprising boundaries of re-distribution of the sharing right to further content sharing group nodes of the content sharing group and content sharing group membership restrictions; and re-distributing the sharing right within the boundaries of re-distribution of the sharing right and content sharing group membership restrictions, wherein the content sharing group is defined as the sharing right is re-distributed.

The method may further comprise accessing the content according to the combined restrictions of the sharing right and the usage right.

The received sharing right may further comprise boundaries for membership of the content sharing group. The received sharing right may comprise a maximal number of devices for re-distribution n, where n is an integer larger or equal to 1. The re-distributed sharing right may comprise a maximal number of devices for re-distribution n-1, where n-1 is an integer larger or equal to 1. The received sharing right may comprise any of a maximal number of renderings; a specified content for rendering; a specified bearer or network for sharing; an asynchronously issued disabler of content sharing group; and a maximal duration in time of the sharing right T. The re-distributed sharing right may comprise a maximal duration in time of the sharing right t, where t is smaller than or equal to T. When the re-distributed right with duration t has lapsed, re-distributing of a sharing right may comprise a maximal duration in time of the sharing right T-t.

The method may further comprise providing information to a content sharing group source node on re-distributed sharing rights.

According to a fifth aspect, there is provided a computer program comprising computer program code comprising instructions to cause a processor on which the computer program code is executed to perform the method according to the fourth aspect.

According to a sixth aspect, there is provided a computer program comprising computer program code comprising instructions to cause a processor on which the computer program code is executed to perform the method according to the third aspect.

### Brief description of drawings

Fig. 1 schematically illustrates a system for distributing sharing rights according to an embodiment.
Fig. 2 schematically illustrates sharing rights distributed according to an embodiment.
Fig. 3 schematically illustrates sharing rights distributed according to an embodiment.
Fig. 4 schematically illustrates sharing rights distributed according to an embodiment.
Fig. 5 is a flow chart illustrating a method according to an embodiment.
Fig. 6 is a flow chart illustrating a method according to an embodiment.
Fig. 7 schematically illustrates a computer readable medium according to an embodiment.

### Detailed description

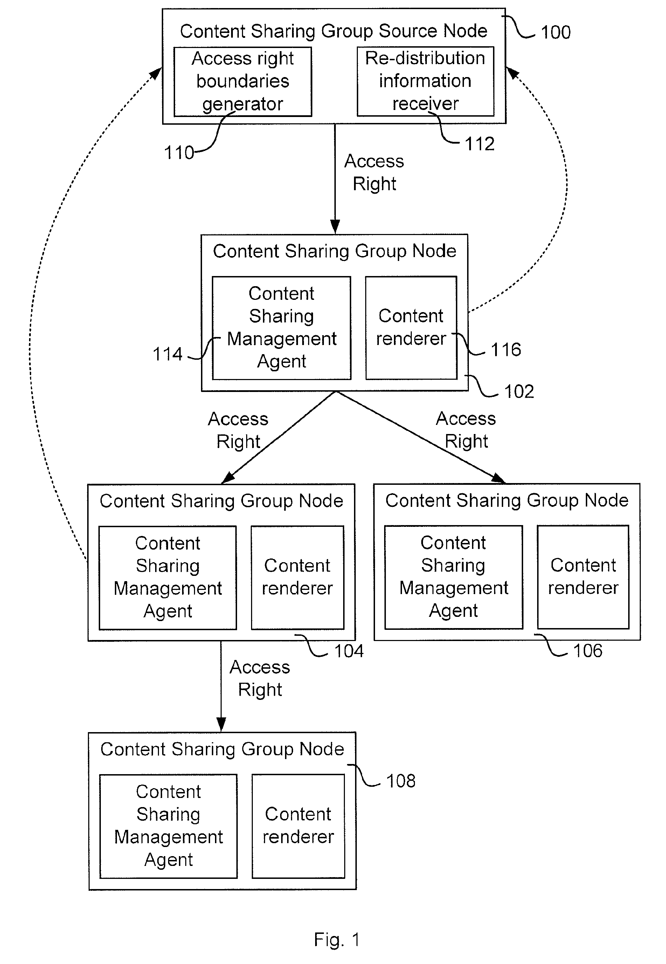

Fig. 1 schematically illustrates a system for distributing sharing rights according to an embodiment. A Content Sharing Group Source Node (CSGSN) 100 is an entity representing a content issuer and is arranged to provide a sharing right to a content sharing group comprising one or more Content Sharing Group Nodes (CSGNs) 102, 104, 106, 108. It is to be noted that the content sharing group is not pre-defined prior providing the sharing right from the CSGSN 100, but is defined as any of the CSGNs re-distribute the sharing right, as will be demonstrated below. This is the key feature which makes the present solution flexible and overcomes drawbacks that prior art solutions show.

The CSGSN 100 is arranged to distribute the sharing right to a CSGN 102, which thus defines a seed to the content sharing group. The sharing right comprises boundaries of re-distribution of the sharing right to further CSGNs 104, 106, 108, whereby the content sharing group is defined as the sharing right is re-distributed. The boundaries can be defined by time or number of devices for which the sharing right is valid, or a combination thereof. Content sharing group membership restrictions are thus defined according to the sharing right.

The definition of time can be a maximum duration of the sharing right, which can be defined by a time span or an end time of the sharing right. When the boundaries only are defined by time, any number of CSGNs, i.e. devices, can be incorporated in the content sharing group, but the sharing right lapses for any of the CSGNs when the defined time is out.

The definition of number of devices is simply a maximum number of CSGNs that is allowed to be included in the content sharing group. Upon re-distribution of the sharing right by a CSGN, it can maximally re-distribute an updated maximum number of re-distributions that is the maximum number of re-distributions it received minus one, since it consumed one for itself. It can divide this updated maximum number between several re-distributions. If the CSGN only received one as its maximum number, re-distribution is not allowed, and this CSGN can thus be considered as a "leaf" of the tree formed by the content sharing group.

If the boundaries are both defined by time and number of devices, the sharing right lapses for any of the CSGNs when the defined time is out. In addition to this, a maximum number of CSGNs that is allowed to be included in the content sharing group is defined. Upon re-distribution of the sharing right by a CSGN, it can maximally re-distribute, if the time has not lapsed, an updated maximum number of re-distributions that is the maximum number of re-distributions it received minus one, since it consumed one for itself. It can divide this updated maximum number between several re-distributions. If the CSGN only received one as its maximum number, re-distribution is not allowed, and this CSGN can thus be considered as a "leaf" of the tree formed by the content sharing group. Optionally, a first re-distributed sharing right to one CSGN, which is given a limited sharing right time lapsing before the received lapse time, can be re-used for a second re-distribution to another CSGN when the limited sharing right time has lapsed, wherein the one and the another CSGN only count as one device to the maximum number of CSGNs, as they shared the given time boundary.

The CSGSN 100 can comprise a sharing right boundaries generator 110 for generating these boundaries of the sharing right. The sharing right boundaries generator 110 can for example base its setting of the boundaries on a request from the CSGN 102, which can be part of a purchasing of content from the CSGSN 100, which can be a content server, or it can base its setting on input from a user of the CSGSN 100, which for example can be a portable device by which the content is created, e.g. a photograph or video sequence shot by the CSGSN. A similar function can be performed in the CSGN, where the sharing right received from a CSGSN can be modified before re-distribution. The limit is here that the sharing right can be restricted, but never increased. The restrictions of the sharing right will be disclosed below.

The CSGNs can comprise a content sharing management agent 114 arranged to manage the sharing right. It is preferably required that any CSGN of the content sharing group is an authorized CSGN, i.e. that it is bound by its behavior to follow rules of content sharing that are a requisite for the CSGSN to distribute the sharing right. This behavior is preferably satisfied by means of the content sharing management agent 114. The content sharing management agent 114 can also be responsible for encryption key management, purchasing of content rights, and/or providing information to the CSGSN about re-distributed sharing rights as indicated by dotted arrow. Here, it should be noted that the provision of information to the CSGSN about re-distributed sharing rights can be performed directly to the CSGSN, or via the CSGN from which the sharing right was received, i.e. via the re-distributing CSGN such that the information propagates to the CSGSN.

The CSGNs can also comprise a content renderer 116 arranged to render content associated with the sharing right. However, the content may only be rendered according to a corresponding usage right, i.e. the rendering is based on combined restrictions of the sharing right and the usage right. The usage right may depend on issued licenses or rights objects on the content. The distribution of sharing rights and usage rights may be combined or separate. The content renderer 116 can be integrated with the device of the CSGN 102, or be, wholly or partly, arranged in a device associated with the CSGN 102, for example, the CSGN 102 is a media bearer, such as a protected memory card, which together with a player for audio or video associated with the protected memory card is able to render the content on a screen and/or by a loudspeaker. An example of the integrated solution is a mobile phone forming the CSGN and also being able to play the content, i.e. having the means for the rendering. The described arrangement with the CSGN being a memory card, and a player associated with it being the content renderer, could in this context be seen as one and the same CSGN. Here, it can be the responsibility of the memory card, as it contains the content sharing management agent, to guarantee that the player behaves according to the rules of content sharing management context. An alternative is that the memory card CSGN does not include a content renderer at all, neither integrated, or by association. Such a CSGN must cooperate with another CSGN that includes a content renderer in order to render any content. In the mentioned scenario, this could mean that the memory card is "attached" to a player, the memory card shares the content sharing group with the player, and then transfers the content and license, which is tied to the content sharing group, to the player.

The sharing rights define allowed membership of the content sharing group, wherein it is necessary to be a member of the content sharing group to gain usage rights to the content. The sharing rights indirectly restrict the usage rights. When conditions are not valid anymore, the CSGN must delete content sharing group data, which disables possibilities for further rendering of the content. The CSGN also communicates to the CSGN that invited it to the content sharing group that it is no longer a member of that content sharing group. This is communicated at a first possible occasion where communication access enabling transmission of required protocol messages to the inviting CSGN is available. The conditions that can be used for restricting sharing rights can be a parameter or a set of parameters defining date/time when membership of content sharing group must be terminated or re-established, maximal number of renderings, reporting identity of the sharing content sharing management node successfully finished before sending content sharing group data, a list specifying the content sharing group contents that are allowed to be rendered, etc. The sharing restrictions can for example be implemented as a mark-up language document, which may include the parameter or set of parameters. The inviting CSGN can be obliged to send an event report for example after successful sharing event and/or at random points in time.

The CSGSN 100 can also comprise a re-distribution information receiver 112, which is arranged to receive information on re-distributed sharing rights as any sharing right is re-distributed by any CSGN, as described above. Thereby, the CSGSN 100 can be aware of the CSGNs of the content sharing group. Based on the received information on re-distributions, the CSGSN can disable distribution of further sharing rights to any CSGN of the content sharing group if it discovers any inconsistencies, fraudulent re-distribution, or unauthorized CSGNs in the content sharing group. This can for example be a CSGN of the content sharing group not having a proper content sharing management agent. The distribution of the information on re-distributed sharing rights from the re-distributing CSGN, which also can comprise a re-distribution information receiver, to the CSGSN 100 will be disclosed below.

The content itself, which is preferably encrypted and being decryptable by a key associated with a usage right which is given to the content sharing group, and thus indirectly by the sharing right, can be distributed together with the sharing right, or be accessed separately by the CSGN with use of the sharing right, e.g. from a content server. Preferably, content encryption key is encrypted by a content sharing group key, which is securely distributed from the CSGSN to the content sharing group, preferably together with the sharing right and comprised in a content sharing group data set.

To further enlighten the principles of the rights distribution, a few use cases will be given here.
1) Consider the CSGSN 100 being a content provider from which a user, by his personal computer 102 via the Internet, purchases content such as a song and gets a sharing right to the song to be used in maximum five devices of a content sharing group. He may listen to the song at his personal computer 102 and one of the five devices is "consumed", and he also re-distributes the sharing right (and the song) to his mobile phone 104 with three of the remaining four possible devices given by the boundaries of the sharing right, and to his portable media player 106 with one of the remaining four possible devices. He can then listen to the song from his mobile phone 104 where one of the three devices is "consumed" and from his portable media player 106, where the one and only re-distributed device is consumed; thus, no re-distribution is possible from the portable media player. When the user comes to his car, he re-distributes sharing right of one of the remaining two possible devices from his mobile phone 104 to the car stereo 108 and can listen to the song while driving to his working site. When he gets to work, he can re-distribute the sharing right, i.e. the last possible device, to his stereo set (not illustrated) at work and listen to the song while working. The formed content sharing group can be used for further songs purchased from the CSGSN 100.
2) Consider the CSGSN 100 being a mobile phone with built in camera with which the user of the mobile phone captures one or a few photos and/or video sequences at a party. The user of the mobile phone then distributes a sharing right to the photos and/or video sequences, and possibly also the photos and/or video sequences, alternatively them being downloadable from a server, to e.g. mobile phones of one or a few of the ones being at the party, giving them sharing right boundary to re-distribute to a limited number of more devices. Thus, the persons gaining the sharing right can re-distribute the sharing right to for example their personal computer, IPTV, or other device for better rendering, or re-distribute to for example some other fellows joining the same party. By the limited sharing right, the one who distributed the photos and/or video sequences can avoid the photos and/or video sequences being distributed unlimited to protect, at least to some certainty, the integrity of the participants of the party.
3) Consider the CSGSN 100 being a content provider from which a user, by his personal computer 102 via the Internet, purchases content such as a song and gets a sharing right to the song to be used in maximum five days. He may re-distribute and listen to the song at any of his devices, for example devices as given in use case 1), during this time. He may also re-distribute the song to a friend who he wants to share this song to, for a maximum of the time left of the five days, and he can choose to set the time for the "lent song" to his friend to for example one day. Here, the boundaries of the sharing right can also comprise a maximal number of devices, such that the friend may re-distribute the song to another friend, or may be prevented to do that, depending on the set boundaries in question of number of CSGNs.

For any of the above demonstrated use cases, further restrictions can be added, such as a maximal number of renderings, a specified content for rendering, a specified bearer or network for sharing, or membership of an already existing content sharing group. If any device do not recognize received sharing rights restrictions, the restriction can be evaluated as invalid by the receiving device.

In any of the use cases presented here, each re-distribution can comprise providing information about the re-distribution to the CSGSN 100 such that the "content owner" is able to keep track on the propagation of the content.

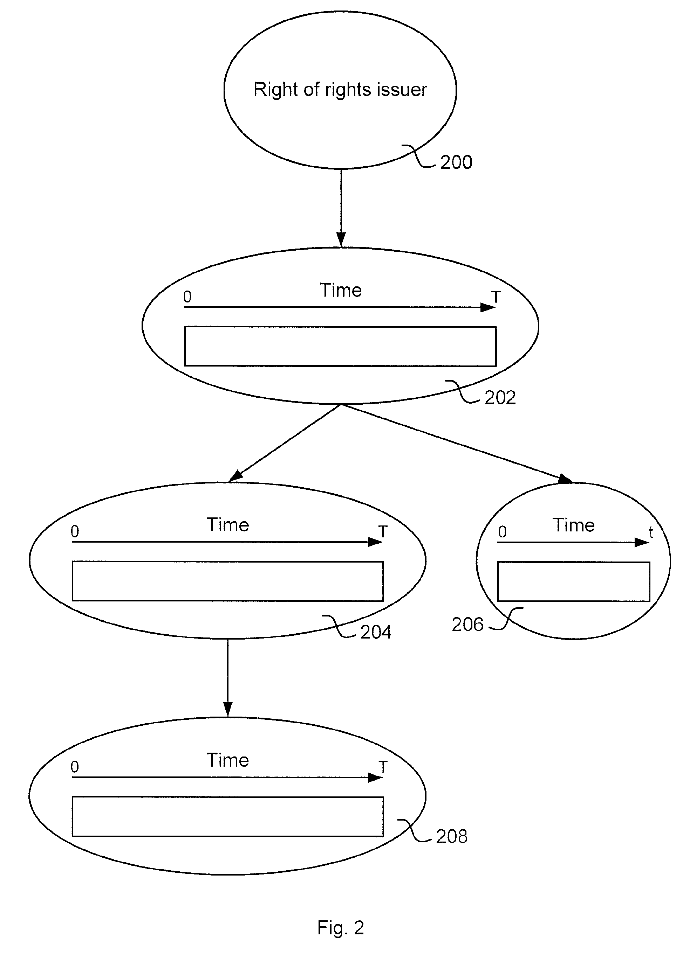

Fig. 2 schematically illustrates sharing rights distributed according to an embodiment. In this embodiment, the boundaries of the sharing right comprise a limitation in time. From the rights 200 held by the rights issuer, or his successor in title, a sharing right 202 limited by a time T is distributed. Here, the limited time can be a time span from 0 to T, where 0 is the time of distributing the sharing right, or an end time of the sharing right, e.g. comprising year, month, and day. The sharing right can be re-distributed as a re-distributed sharing right 204 with a maximal duration within the boundaries of the originally distributed sharing right 202, i.e. with a maximal duration until time T. Here, it should be noted that, although illustrated that the sharing right spans from 0 to T, the time that is likely to have passed since time 0, i.e. since distribution of the original sharing right 202, is already "consumed", i.e. the sharing right 204 will lapse at the same time as the sharing right 202. The sharing right can also be re-distributed as a re-distributed sharing right 206 with a shorter duration than the boundaries of the originally distributed sharing right 202 on the discretion of the re-distributor, i.e. with a duration until time t, where t<T. Here, it should be noted that, although illustrated that the sharing right spans from 0 to t, the time that is likely to have passed since time 0, i.e. since distribution of the original sharing right 202, is already "consumed", i.e. the sharing right 206 will lapse at time t from distribution of the original sharing right 202. The holder of sharing right 204 can also re-distribute a sharing right 208 which have features similar to the sharing right 204.

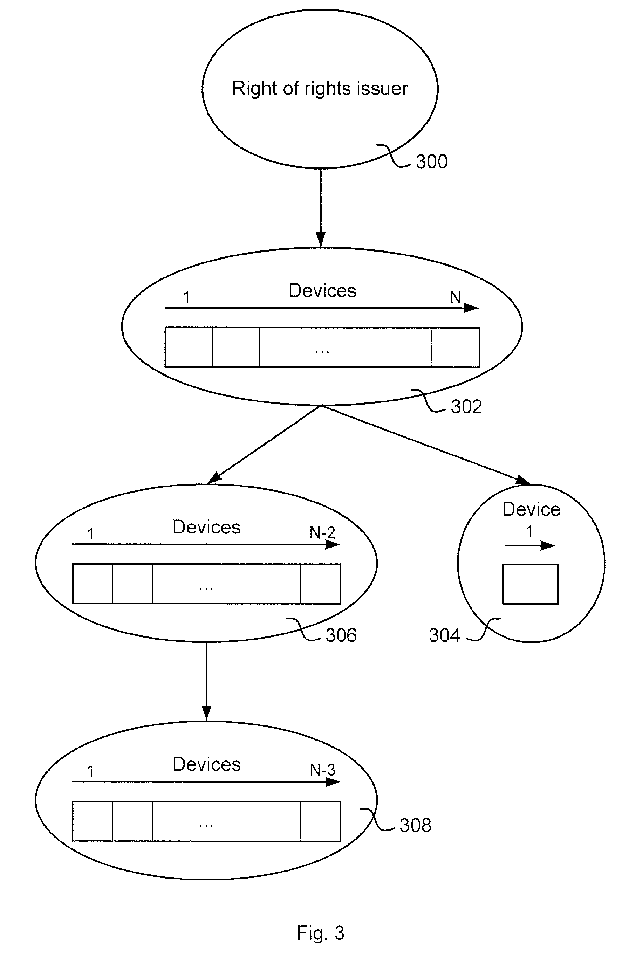

Fig. 3 schematically illustrates sharing rights distributed according to an embodiment. In this embodiment, the boundaries of the sharing right comprise a limitation in number of devices, i.e. number of CSGNs of the content sharing group. From the rights 300 held by the rights issuer, or his successor in title, a sharing right 302 limited by a maximal number of devices N is distributed. Here, N is a positive integer. A value of one means that no re-distribution is possible. The sharing right can be re-distributed as a re-distributed sharing right 304 with permission to be used in one device only, i.e. no re-distribution allowed, as long as the maximal content sharing group size within the boundaries of the originally distributed sharing right 302, i.e. with a maximal number of CSGNs, preferably including the CSGSN, in the content sharing group of N. Here, it should be noted that, since the sharing right boundary is N devices, the re-distribution can only comprise a boundary of N-1 since one is already "consumed" for the entity holding the originally distributed sharing right. The sharing right can also be re-distributed as a re-distributed sharing right 306 with sharing right for several devices as long as it is within the boundaries of the originally distributed sharing right 302, and on the discretion of the re-distributor, i.e. with a maximal number of devices N-2 (one consumed for re-distributing sharing right 304 and one consumed by the entity holding the originally distributed sharing right 302). Here, it should be noted that, to be able to re-distribute, the remaining available devices of the sharing right have to be at least one. The holder of sharing right 306 can also re-distribute a sharing right 308 which have features similar to the sharing right 306, if the remaining available devices of the sharing right are at least one.

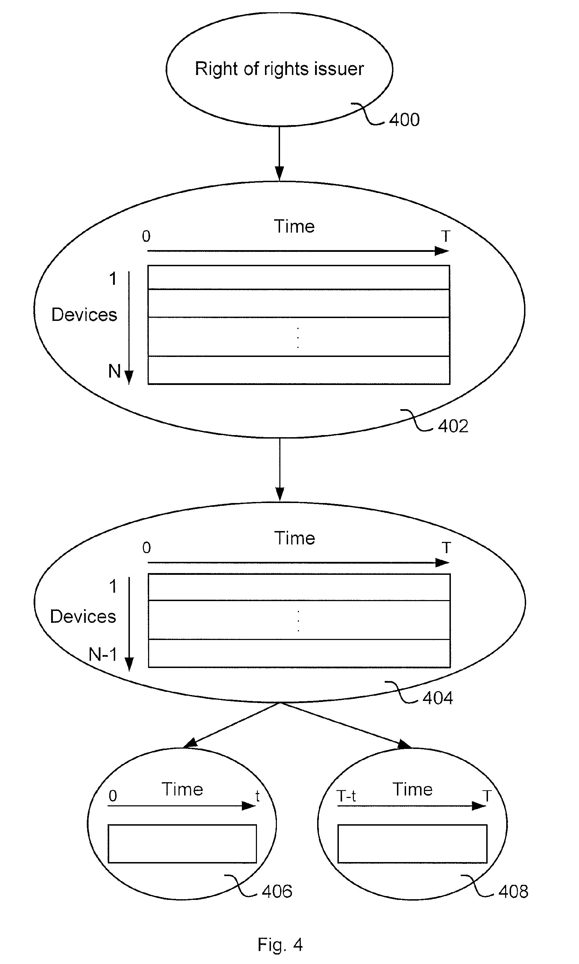

Fig. 4 schematically illustrates sharing rights distributed according to an embodiment. In this embodiment, the boundaries of the sharing right comprise both a limitation in time and in number of devices, i.e. number of CSGNs of the content sharing group. From the rights 400 held by the rights issuer, or his successor in title, a sharing right 402 limited by a time T and a maximal number of devices N is distributed. Here, the limited time can be a time span from 0 to T, where 0 is the time of distributing the sharing right, or an end time of the sharing right, e.g. comprising year, month, and day. Further, N is a positive integer. A value of one means that no re-distribution is possible, so in the context of the present invention, N is in practice larger than or equal to two. The sharing right can be re-distributed as a re-distributed sharing right 404 with a maximal duration within the boundaries of the originally distributed sharing right 402, i.e. with a maximal duration until time T. Here, it should be noted that, although illustrated that the sharing right spans from 0 to T, the time that is likely to have passed since time 0, i.e. since distribution of the original sharing right 402, is already "consumed", i.e. the sharing right 404 will lapse at the same time as the sharing right 402. Further, the re-distributed sharing right 404 has sharing right for several devices as long as it is within the boundaries of the originally distributed sharing right 402, and on the discretion of the re-distributor, i.e. with a maximal number of devices N-1 (consumed by the entity holding the originally distributed sharing right 402). Here, it should be noted that, to be able to re-distribute, the remaining available devices of the sharing right have to be at least one. The sharing right can also be re-distributed as a re-distributed sharing right 406 with a shorter duration than the boundaries of the originally distributed sharing right 402 on the discretion of the re-distributor, i.e. with a duration until time t, where t<T. Here, it should be noted that, although illustrated that the sharing right spans from 0 to t, the time that is likely to have passed since time 0, i.e. since distribution of the original sharing right 402, is already "consumed", i.e. the sharing right 406 will lapse at time t from distribution of the original sharing right 402. After time t, the device right of sharing right 406 can be re-used for a second re-distribution of a sharing right 408 to another CSGN when the limited sharing right time t has lapsed, wherein the one and the another CSGN only count as one device to the maximum number of CSGNs, as they shared the given time boundary. The holder of sharing right 404 can also re-distribute further sharing rights (not illustrated) as long as the boundaries of the originally distributed sharing rate 402 are adhered.

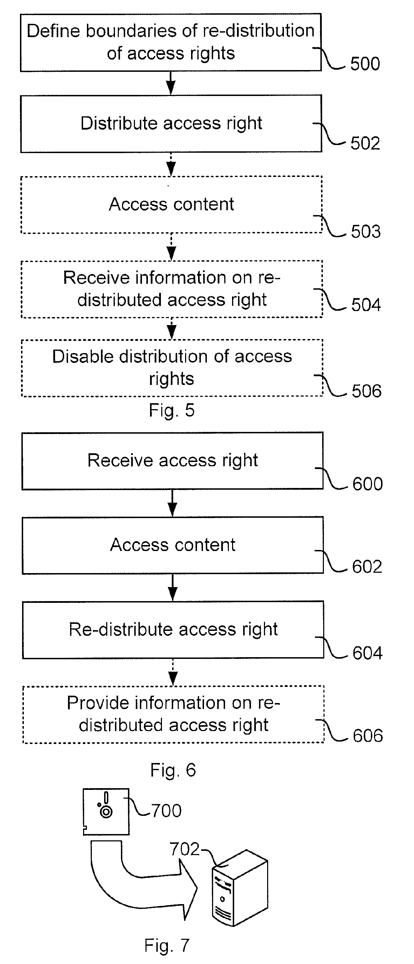

Fig. 5 is a flow chart illustrating a method performed at a CSGSN according to an embodiment. In a sharing right boundaries definition step 500, boundaries of re-distribution for the sharing right to further CSGNs of a content sharing group to be formed is defined. Then, in a sharing right distribution step 502, the sharing right is distributed to a CSGN forming the seed to the content sharing group. The distributed sharing right comprises the defined boundaries of re-distribution of the sharing right to further CSGNs, which then form the content sharing group. The boundaries of the sharing right can be any of the above demonstrated with reference to Figs. 1 to 4.

Optionally, the CSGSN can also access content in a content access step 503. This can be performed, in a similar way as demonstrated for the CSGN, utilizing usage rights for the content.

In an optional information reception step 504, information about any re-distributed sharing right is received from the CSGN that re-distributed the sharing right. The information comprises information about the CSGN to which the sharing right was re-distributed, e.g. identity. The information can be received directly from the re-distributing CSGN, or the information can be propagated from the re-distributing CSGN through other CSGNs of the content sharing group to reach the CSGSN. Thus, the CSGSN can keep track on the CSGNs of the content sharing group.

An additional security mechanism can be added, where use of random reporting mechanism is employed. This implies that any CSGN report at random times back to the CSGSN what content sharing data they have received and what other nodes they have invited to the content sharing group and with which content sharing data. The CSGSN can then correlate these additional reports that arrive from time to time with a database of the CSGSN that is built up through regular joining reports of the content sharing group. In case of mismatch, which can be caused by communication failure or fraudulent nodes, actions can be taken, such as the CSGSN terminating the content sharing group and advising all its neighbour CSGNs and known leaf CSGNs to propagate the terminatin message within the content sharing group. This would isolate any fraudulent node since all the nodes around it would terminate their participation in the content sharing group.

Further optionally, in a sharing right distribution disablement step 506, the CSGSN can disable distribution of sharing rights to a CSGN of the content sharing group based on the received information about any re-distributed sharing right. This can for example be if it discovers any inconsistencies, fraudulent re-distribution, or unauthorized CSGNs in the content sharing group. This can for example be a CSGN of the content sharing group not having a proper content sharing management agent. Disabling of distribution can be disabling any further content to the content sharing group, disabling new content sharing groups to be established by any CSGN of the offending content sharing group, or sending a content sharing group disabling message to the invited CSGN, which then shall propagate this further to the other CSGNs of the content sharing group. The CSGSN is also involved in providing content and usage rights to the content sharing group.

Fig. 6 is a flow chart illustrating a method performed at a CSGN according to an embodiment. In a sharing right reception step 600, a sharing right is received, either from a CSGSN or a CSGN, comprising boundaries of re-distribution of the sharing right to further CSGNs. The sharing right gives the CSGN right to access content associated with the sharing right. The right to access the content is also restricted by a usage right associated to the content. This can be performed in a content access step 602, where the content either is distributed in a similar way as the sharing right, or can be acquired separately, e.g. from a content server. In a sharing right re-distribution step 604, the sharing right can be re-distributed to one or more further CSGN within the boundaries of the sharing right, as has been demonstrated above with reference to any of Figs. 1 to 4. Upon re-distribution, the content sharing group is formed by the CSGNs that the sharing right is re-distributed to. Optionally, in an information provision step 606, information about the CSGN to which the sharing right is re-distributed to is provided to the CSGSN. The information can be provided directly to the CSGSN, or the information can be propagated to the CSGSN via other CSGNs of the content sharing group to reach the CSGSN. Thus, the CSGSN can keep track on the CSGNs of the content sharing group.

The methods according to the present invention is suitable for implementation with aid of processing means, such as computers and/or processors, as the operation of sharing rights highly rely on computerized signal processing in general. Therefore, there is provided computer programs, comprising instructions arranged to cause the processing means, processor, or computer to perform the steps of any of the methods according to any of the embodiments described with reference to any of Figs. 5 or 6, in a CSGSN or a CSGN, respectively. The computer programs preferably comprises program code which is stored on a computer readable medium 700, as illustrated in Fig. 7, which can be loaded and executed by a processing means, processor, or computer 702 to cause it to perform the methods, respectively, according to embodiments of the present invention, preferably as any of the embodiments described with reference to any of Figs. 5 or 6. The computer 702 and computer program product 700 can be arranged to execute the program code sequentially where actions of the any of the methods are performed stepwise, but mostly be arranged to execute the program code on a real-time basis where actions of any of the methods are performed upon need and availability of data. The processing means, processor, or computer 702 is preferably what normally is referred to as an embedded system. Thus, the depicted computer readable medium 700 and computer 702 in Fig. 7 should be construed to be for illustrative purposes only to provide understanding of the principle, and not to be construed as any direct illustration of the elements. The processing means preferably comprise installed unique credentials for reliable authentication and secure transfer of data between nodes of the content sharing group. This can be done according to methods and principles known from public key infrastructure field.

## Claims

1. A content sharing group node of a content sharing group, the content sharing node is arranged to receive a sharing right comprising boundaries of re-distribution of the sharing right and content sharing group membership restrictions to further content sharing group nodes of the content sharing group, arranged to access the content according to the combined restrictions of the sharing right and a usage right, and arranged to re-distribute the sharing right within the boundaries of re-distribution of the sharing right and to restrict its content sharing group membership according to the sharing right, wherein the content sharing group is defined as the sharing right is re-distributed.

2. The content sharing group node according to claim 1, wherein the received sharing right comprises a parameter or a set of parameters defining the boundaries of re-distribution.

3. The content sharing group node according to claim 2, wherein the parameter or set of parameters t comprises a maximal number of devices for re-distribution n, where n is an integer larger or equal to 1.

4. The content sharing group node according to claim 3, wherein the parameter or set of parameters comprises a maximal number of devices for re-distribution n-1, where n-1 is an integer larger or equal to 1.

5. The content sharing group node according to any of the preceding claims, wherein the received sharing right further comprises boundaries for membership of the content sharing group.

6. The content sharing group node according to any of the preceding claims, wherein the parameter or set of parameters comprises any of
a maximal number of renderings;
a specified content for rendering;
a specified bearer or network for sharing; and
an asynchronous disabler of content sharing group; and
a maximal duration in time of the sharing right T.

7. The content sharing group node according to claim 6, wherein the parameter or set of parameters comprises a maximal duration in time of the sharing right t, where t is smaller than or equal to T.

8. The content sharing group node according to claim 7, wherein when the re-distributed right with duration t has lapsed, re-distribution of a sharing right with the parameter or set of parameters comprising a maximal duration in time of the sharing right T-t is re-distributable.

9. The content sharing group node according to any of the preceding claims, comprising a content sharing management agent arranged to manage the sharing rights.

10. The content sharing group node according to any of the preceding claims, being arranged to provide information to a content sharing group source node on re-distributed sharing rights.

11. The content sharing group node according to claim 10, wherein the information on re-distributed sharing rights is provided via the content sharing group node from which the sharing right was received.

12. The content sharing group node according to any of the preceding claims, further comprising a content renderer arranged to render content associated with the sharing right.

13. A content sharing group source node arranged to distribute a sharing right to a content sharing group node according to any of the preceding claims of a content sharing group, the sharing right comprising boundaries of re-distribution of the sharing right to further content sharing group nodes according to any of the preceding claims of the content sharing group, wherein the content sharing group is defined as the sharing right is re-distributed.

14. The content sharing group source node according to claim 13, wherein the boundaries is defined by a parameter or set of parameters comprising any of
a maximal number of renderings;
a specified content for rendering;
a specified bearer or network for sharing;
an asynchronously issued disabler of content sharing group; and
a maximum duration in time of the sharing right.

15. The content sharing group source node according to claim 13 or 14, wherein the boundaries is a parameter or set of parameters comprising a maximum number N of content sharing group nodes of the sharing right.

16. The content sharing group source node according to any of claims 13 to 15, wherein the received sharing right further comprises boundaries for membership of the content sharing group.

17. The content sharing group source node according to any of claims 13 to 16, being a portable device with wireless communication abilities, wherein the content is created by means of the portable device.

18. The content sharing group source node according to claim 17, wherein the portable device is a mobile telephone.

19. The content sharing group source node according to any of claims 13 to 16, being a content server.

20. The content sharing group source node according to any of claims 12 to 18, being arranged to receive information from a content sharing group node on re-distributed sharing rights.

21. The content sharing group source node according to claim 20, further being arranged to disable distribution of sharing rights to a content sharing group node of the content sharing group based on the received information on re-distributed sharing rights.

22. A method for sharing rights distribution from a content sharing group source node, the method comprising
defining boundaries of re-distribution of a sharing right to further content sharing group nodes of a content sharing group, and content sharing group restrictions; and
distributing the sharing right to a content sharing group node of the content sharing group, the sharing right comprising the boundaries of re-distribution of the sharing right to further content sharing group nodes of the content sharing group such that their content sharing group memberships are restricted according to the sharing right, wherein the content sharing group is defined as the sharing right is re-distributed.

23. The method according to claim 22, further comprising receiving information from a content sharing group node on re-distributed sharing rights.

24. The method according to claim 23, further comprising disabling distribution of sharing rights to a content sharing group node of the content sharing group based on the received information on re-distributed sharing rights.

25. A method for sharing rights distribution from a content sharing group node of a content sharing group, the method comprises
receiving a sharing right comprising boundaries of re-distribution of the sharing right to further content sharing group nodes of the content sharing group and content sharing group membership restrictions; and
re-distributing the sharing right within the boundaries of re-distribution of the sharing right and content sharing group membership restrictions, wherein the content sharing group is defined as the sharing right is re-distributed.

26. The method according to claim 25, further comprising accessing the content according to the combined restrictions of the sharing right and the usage right.

27. The method according to claim 25 or 26, wherein the received sharing right comprises a maximal duration in time of the sharing right T and the re-distributed sharing right comprises a maximal duration in time of the sharing right t, where t is smaller than or equal to T, the method further comprising, when the re-distributed right with duration t has lapsed, re-distributing of a sharing right comprising a maximal duration in time of the sharing right T-t.

28. The method according to any of claims 25 to 27, further comprising providing information to a content sharing group source node on re-distributed sharing rights.

29. A computer program comprising computer program code comprising instructions to cause a processor on which the computer program code is executed to perform the method according to any of claims 22 to 24.

30. A computer program comprising computer program code comprising instructions to cause a processor on which the computer program code is executed to perform the method according to any of claims 25 to 28.
